# DEMANDE DE BREVET EUROPEEN

(11) **EP 1 542 103 A1**
(43) Date de publication de la demande: **15.06.2005**
(21) Numéro de dépôt: 04356192.7
(22) Date de dépôt: 09.12.2004
(51) Int. Cl.: G05B 19/042, H01H 43/10, G08B 21/02

(54) **Procédé et dispositif de surveillance et de sécurité d'une minuterie**

(30) Priorité: 09.12.2003 FR 0314413
(71) Demandeur: Invensys Appliance Controls S.A., 74300 Cluses (FR)
(72) Inventeur: Randon, Jean-Luc, 74600 Seynod (FR); Gusse, Jean-Michel, 74700 Sallanches (FR); Xardel, François, 74440 Mieussy (FR)
(74) Mandataire: Bratel, Gérard

(57) **Abrégé**

L'invention concerne les minuteries électro-mécaniques pour sélection, affichage et contrôle du temps de fonctionnement d'un appareil ou d'une installation. A partir de la rotation motorisée d'un organe de la minuterie (1), il est émis un signal électrique (Sa) à deux niveaux, alternativement haut et bas, dont les changements d'état s'effectuent normalement à des intervalles de temps réguliers (T). Ces intervalles de temps sont comparés dans une unité électronique (5) à une durée prédéterminée (T1), supérieure à leur valeur normale. En cas de dépassement de cette durée prédéterminée, le fonctionnement de la minuterie (1) est interrompu automatiquement. Toute anomalie de la rotation de la minuterie provoque ainsi la mise à l'arrêt de l'appareil ou installation concerné, et évite le dépassement du temps sélectionné. L'invention s'applique en particulier à une minuterie de solarium à lampes émettrices de rayonnement ultra-violet (2).

## Description

La présente invention concerne, de façon générale, les minuteries électro-mécaniques qui sont prévues pour sélectionner, afficher et contrôler le temps de fonctionnement d'un appareil ou d'une installation, par exemple un appareil électro-domestique, ou un dispositif technique tel qu'un chargeur de batterie, ou encore une installation telle qu'un solarium. Plus particulièrement, cette invention s'intéresse à un système de surveillance et de sécurité, adapté à une telle minuterie.

Dans la suite de l'exposé, l'invention sera plus spécialement décrite et expliquée, à titre d'exemple, par référence à une minuterie qui contrôle un solarium.

Un solarium, de type professionnel ou individuel, comporte des lampes émettrices de rayonnement ultra-violet, dont le temps de fonctionnement est habituellement programmable du solarium et contrôlable au moyen d'une minuterie, qui le plus souvent est de type électro-mécanique. Le temps de fonctionnement programmé du solarium est par exemple de 20, 30 ou 45 minutes, et une mise à l'arrêt automatique de l'installation doit normalement se produire lorsque ce temps est écoulé.

Toutefois, une telle minuterie électro-mécanique peut être sujette à divers incidents de fonctionnement tels que : défaut d'alimentation de son moteur électrique (par exemple : fil électrique coupé ou déconnecté) ; blocage de ce moteur en raison d'un obstacle, tel qu'un débris, rencontré par son rotor ; blocage ou freinage de la manette de sélection des temps sur un élément environnant ; "collage" du contact électrique principal de la minuterie. Ces diverses défaillances peuvent entraîner un dépassement du temps de fonctionnement programmé sur la minuterie.

Comme on le conçoit aisément, un dépassement important du temps de fonctionnement habituel peut avoir des conséquences graves, non seulement pour les appareils ou installations concernés, mais aussi pour leurs utilisateurs ou pour d'autres autres personnes présentes sur place, ce qui est notamment le cas d'un solarium, pour lequel toute exposition excessive de personnes aux rayons ultra-violets doit être évitée.

Du reste, dans ce domaine, il existe déjà, ou il existera prochainement, des normes de sécurité qui, en particulier, exigent que dans le cas d'une quelconque défaillance de la minuterie, le fonctionnement de l'installation doit être interrompu dans un délai inférieur à 110 % du temps affiché. Ainsi par exemple, pour un temps d'exposition affiché de 30 minutes, et si la minuterie est défaillante, la coupure doit intervenir au plus tard 33 minutes après l'instant d'origine.

Il convient aussi d'éviter, autant que possible, la sélection des temps de programmation inappropriés, en particulier des temps trop courts (par exemple inférieurs à 3 minutes), ceci pour des raisons qui apparaîtront plus loin.

Les solutions actuelles, telles que le recours à deux minuteries électro-mécaniques, montées en série, ou à un relais temporisé, ne s'avèrent pas encore satisfaisantes.

La présente invention vise à fournir une solution appropriée, procurant une sécurité totale en cas de défaillance d'une minuterie du genre considéré, et répondant en particulier aux exigences posées pour la sécurité des personnes.

A cet effet, l'invention a premièrement pour objet un procédé de surveillance et de sécurité d'une minuterie électro-mécanique, le procédé consistant essentiellement, pour éviter le dépassement du temps sélectionné et affiché par la minuterie :
- à émettre, à partir de la rotation motorisée d'un organe de la minuterie, un signal électrique à deux niveaux, alternativement haut et bas, dont les changements d'état s'effectuent à des intervalles de temps réguliers au cours du fonctionnement normal de la minuterie ;
- à comparer les intervalles de temps entre changements d'état successifs dudit signal électrique à une durée prédéterminée, supérieure à la valeur de ces intervalles au cours du fonctionnement normal de la minuterie ; et
- en cas de dépassement de ladite durée déterminée, à interrompre le fonctionnement de la minuterie, en provoquant ainsi la mise à l'arrêt de l'appareil ou installation concerné.

Ainsi, toute interruption ou anomalie de la rotation de la partie mécanique de la minuterie, ou de son moteur électrique, est automatiquement détectée du fait que les changements d'état du signal émis deviennent inexistants, ou du moins anormalement espacés. La minuterie est alors automatiquement arrêtée, provoquant elle-même la coupure de l'alimentation électrique de l'appareil ou de l'installation dont elle contrôle le fonctionnement.

Il peut ainsi être obtenu qu'à la suite d'un incident quelconque, la minuterie s'arrête, obligatoirement, peu de temps après l'apparition de cet incident, ce qui garantit le respect des prescriptions de sécurité, telles que celles fixant à 110 % du temps affiché la durée maximale de fonctionnement en cas de défaillance.

Avantageusement, le procédé objet de l'invention comprend encore, en cas de dépassement de la durée prédéterminée provoquant l'interruption du fonctionnement de la minuterie, l'émission d'un signal avertisseur, notamment un signal acoustique ou lumineux. L'utilisateur est ainsi prévenu de la défaillance de la minuterie, et de la mise à l'arrêt (en résultant) de l'appareil ou installation concerné.

Toutefois, si le temps affiché par l'utilisateur sur la minuterie est très court, par exemple inférieur à 3 minutes, le procédé dont le principe a été défini ci-dessus ne permet pas de respecter la norme, selon laquelle la durée maximale de fonctionnement en cas de défaillance ne doit pas dépasser 110 % du temps affiché (ici un temps court). En effet, si l'intervalle de temps normal entre les changements d'état du signal électrique émis est par exemple de l'ordre de 2 minutes, un non changement de cet état pourrait, en cas d'anomalie, n'être détecté qu'au bout de 4 minutes environ, pour un temps programmé de l'ordre de 3 minutes, dans le cas d'un incident intervenant vers la fin de ce temps.

Pour résoudre cette difficulté, on considère, suivant un aspect avantageux du procédé objet de l'invention, qu'une sélection de temps courts est inappropriée et ne doit pas permettre la mise en marche de l'appareil ou installation concerné, ce qui évitera toute situation hors norme telle qu'envisagée ci-dessus. A cet effet, le procédé objet de l'invention comprend encore, dans un mode de mise en oeuvre préféré, une opération de détection d'un temps affiché inférieur à un temps minimum prédéfini, la détection effective d'un temps affiché inférieur au temps minimum provoquant, au bout d'un temps bref, le non fonctionnement de la minuterie, ainsi que l'émission d'un signal avertisseur, notamment un signal acoustique ou lumineux. Une légère temporisation de l'action déclenchée permet de ne pas interpréter comme un temps affiché court une position intermédiaire prise involontairement et transitoirement au cours de la sélection d'un temps en réalité plus long, et immédiatement corrigé par l'utilisateur.

Ainsi, le procédé ci-dessus défini permet de respecter totalement les prescriptions de sécurité applicables, aussi bien pour des temps affichés moyens ou longs que pour des temps affichés courts, en commandant une neutralisation de la minuterie pour les temps courts.

Le procédé peut encore comprendre la détection d'un éventuel "collage" du contact principal de la minuterie, à la fin du temps sélectionné, provoquant alors l'arrêt de la minuterie. Ce procédé peut enfin comprendre l'enregistrement des divers incidents de fonctionnement détectés.

La présente invention a aussi pour objet un dispositif de surveillance et de sécurité d'une minuterie électro-mécanique, pour la mise en oeuvre du procédé précédemment défini.

Ce dispositif comprend essentiellement, en combinaison, pour éviter le dépassement du temps sélectionné et affiché sur la minuterie :
- sur un organe rotatif de la minuterie en combinaison, une came qui coopère avec au moins un contact électrique placé sur une branche de circuit, de manière à générer le signal électrique à deux niveaux, dont les changements d'état s'effectuent à intervalles de temps réguliers au cours du fonctionnement normal de la minuterie ;
- une unité électronique à laquelle est raccordée la branche de circuit précitée, et dans laquelle est effectuée une analyse dudit signal électrique à deux niveaux, avec détection des situations anormales dans lesquelles l'intervalle de temps entre changements d'état successifs de ce signal dépasse une durée prédéterminée ; et
- une commande de relais, en sortie de l'unité électronique, répondant à la détection d'une situation anormale par une interruption du fonctionnement de la minuterie.

Ainsi, le dispositif de l'invention associe, à la partie électro-mécanique de la minuterie, une unité électronique qui, à l'aide de simples contacts, surveille la rotation de la minuterie et permet de contrôler si cette rotation est bloquée ou anormalement freinée, et commande alors le relais de sécurité mettant à l'arrêt la minuterie et aussi, par voie de conséquence, l'appareil ou installation concerné.

Dans une forme de réalisation préférée, ce dispositif de surveillance et de sécurité de minuterie comprend un contact électrique supplémentaire actionné par la came de l'organe rotatif précité de cette minuterie, en cas de sélection par ledit organe d'un temps inférieur à un temps minimum prédéfini, ce contact supplémentaire étant placé sur une autre branche de circuit raccordée à l'unité électronique, et assurant le maintien à l'arrêt de la minuterie en cas de sélection d'un temps bref. Ainsi, le dispositif assure aussi la "gestion" des temps affichés trop courts, et permet donc de résoudre dans tous les cas le problème à la base de l'invention. De plus, ledit contact supplémentaire permet aussi la détection d'un éventuel "collage" du contact principal de la minuterie par un montage en série de ce contact supplémentaire avec le contact principal.

On notera que le dispositif de sécurité objet de la présente invention est particulièrement simple et économique, car il ne modifie pas la structure de base électro-mécanique de la minuterie, et complète simplement cette structure de base par des contacts supplémentaires et par une unité électronique. De plus, les temps de sécurité intervenant dans le fonctionnement du dispositif sont facilement programmés et gérés par l'unité électronique, sans modification des éléments mécaniques, ce qui procure une grande facilité d'adaptation aux divers cas d'application pouvant être rencontrés.

L'invention sera mieux comprise à l'aide de la description qui suit, en référence au dessin schématique annexé représentant, à titre d'exemple, une forme d'exécution de ce dispositif de surveillance et de sécurité d'une minuterie, et illustrant le fonctionnement de ce dispositif :
Figure 1 est un schéma électrique d'une minuterie équipée du dispositif objet de l'invention, appliquée à un solarium ;
Figures 2 et 3 sont des diagrammes illustrant le fonctionnement du dispositif de surveillance et de sécurité de la minuterie considérée, dans diverses situations ;
Figure 4 est une représentation schématique de l'organe rotatif de cette minuterie, en particulier de sa came.

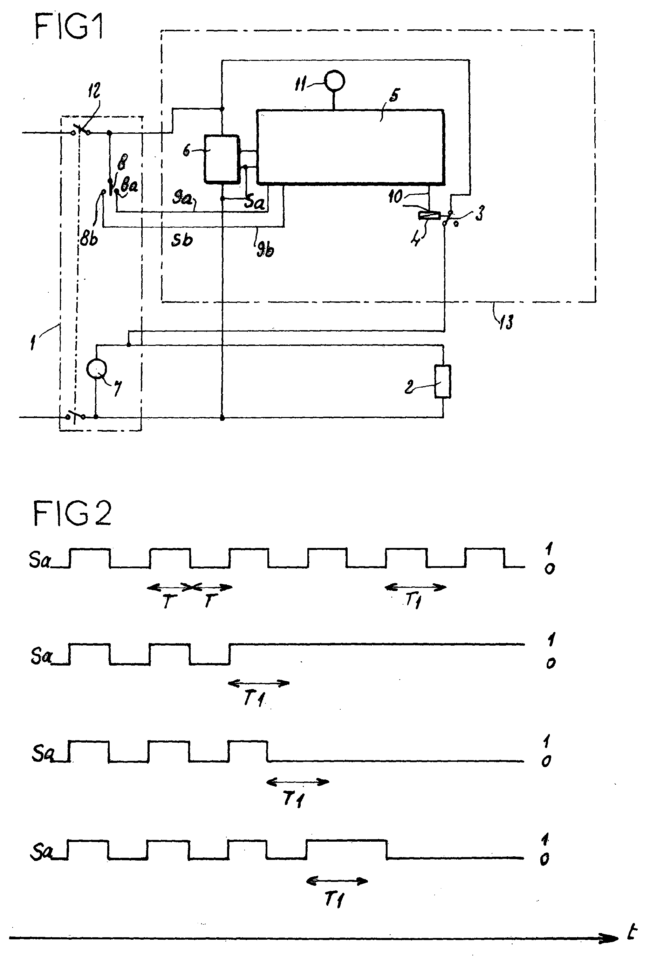

La figure 1 montre les éléments d'une minuterie électro-mécanique 1, intégrée à un solarium à lampes émettrices de rayonnement ultra-violet, symbolisées en 2. Ces lampes 2 sont montées électriquement en série avec un contact 3 d'un relais 4, fermé au repos, l'alimentation électrique de la bobine du relais 4 étant contrôlée par une unité électronique 5, en particulier un microprocesseur convenablement programmé, avec une alimentation électrique 6, l'unité électronique 5 et son alimentation 6 faisant partie d'un dispositif de surveillance et de sécurité 13.

De façon connue en soi, la minuterie 1 comporte un moteur électrique 7, qui est accouplé à un organe rotatif (non directement représenté) servant à sélectionner et afficher les temps.

Sur l'organe rotatif de la minuterie, entraîné par le moteur électrique 7, est montée ou directement formée une came rotative qui coopère, de façon connue, avec un contact principal 12 de la minuterie 1.

La came rotative coopère aussi avec un double contact électrique mobile 8, qui coopère lui-même avec deux contacts fixes 8a et 8b, intercalés respectivement sur deux branches de circuit 9a et 9b qui aboutissent l'une et l'autre à l'entrée de l'unité électronique 5. L'agencement de la came rotative et du contact 8 est telle que, lors de la rotation de ladite came (donc du moteur 7) à vitesse normale, le contact 8 s'ouvre et se ferme alternativement, à un rythme régulier, vis-à-vis du contact fixe 8a. Ainsi, sur la branche de circuit 9a, on dispose d'un signal électrique Sa à deux niveaux, respectivement haut et bas, aussi désignés par "un" et "zéro", signal dont les changements d'état s'effectuent en principe à des intervalles de temps réguliers T, par exemple compris entre 1 minute 30 secondes et 2 minutes.

Dans l'unité électronique 5, le signal Sa est analysé, et en particulier les intervalles de temps successifs entre les changements d'état successifs de ce signal Sa sont comparés avec une durée prédéterminée T1, légèrement supérieure (par exemple de quelques secondes) à la valeur normale des intervalles de temps T. Ainsi, l'unité électronique 5 traite une information sur la rotation du moteur 7, donnée par le signal Sa.

Si la comparaison effectuée par l'unité électronique 5 indique que les intervalles de temps T entre changements d'état du signal Sa sont inférieurs à la durée T1, la rotation du moteur 7 est considérée comme normale et la minuterie 1 poursuit son fonctionnement, jusqu'à la fin du temps (par exemple de 30 minutes) affiché sur cette minuterie. En d'autres termes, la sortie 10 de l'unité électronique 5 est maintenue dans un état tel que la bobine du relais 4 n'est pas alimentée, de sorte que le contact 3 de ce relais 4 conserve sa position fermée et alimente les lampes 2.

Par contre, si la comparaison effectuée par l'unité électronique 5 indique que les intervalles de temps T entre les changements d'état du signal Sa deviennent supérieurs à la durée T1, ou qu'il ne se produit plus de changement d'état, la rotation du moteur 7 et de l'organe rotatif accouplé à ce moteur doit être considérée comme anormale, c'est-à-dire que cette rotation est soit freinée, soit bloquée ; il existe alors un risque d'alimentation des lampes 2 pendant un temps supérieur au temps initialement affiché par la minuterie 1, ce qui risque de représenter un temps d'exposition excessif aux rayons ultra-violets. Le dysfonctionnement est donc détecté par l'unité électronique 5, et celle-ci envoie sur sa sortie 10 un signal qui, alimentant la bobine du relais 4, ouvre le contact 3 de ce relais 4. Le dispositif interrompt ainsi le fonctionnement de la minuterie 1, tout en coupant l'alimentation des lampes 2. Simultanément, l'unité électronique 5 déclenche un avertisseur sonore 11, du genre vibreur, pour prévenir l'utilisateur de ce dysfonctionnement par l'émission d'un signal acoustique.

En particulier, pour des temps affichés moyens ou longs, on obtient ainsi une mise à l'arrêt automatique de la minuterie 1, et de l'alimentation électrique des lampes 2, qui intervient dans tous les cas après d'un temps ne dépassant pas 110% du temps initialement affiché.

Cette exigence pouvant ne pas être respectée, avec les seuls moyens précédemment décrits, dans le cas où le temps affiché est court, par exemple inférieur à 3 minutes, il est prévu qu'en cas de sélection d'un temps court, le contact 8 se ferme vis-à-vis du contact fixe 8b. Ainsi, le contact 8 en se fermant provoque, sur la branche de circuit 9b, l'émission d'un signal électrique Sb qui, après une courte temporisation, provoquera lui-même d'une part l'arrêt de la minuterie 1 par ouverture de contact 3, et d'autre part l'avertissement de l'utilisateur par le vibreur 11, lui indiquant alors qu'il a fait une mauvaise sélection de temps.

Le montage en série des deux contacts 8, 8b et 12 permet aussi la détection d'un éventuel "collage" du contact principal 12 de la minuterie 1, à l'issue du temps sélectionné sur cette minuterie, pour la mise à l'arrêt de celle-ci dans un tel cas également.

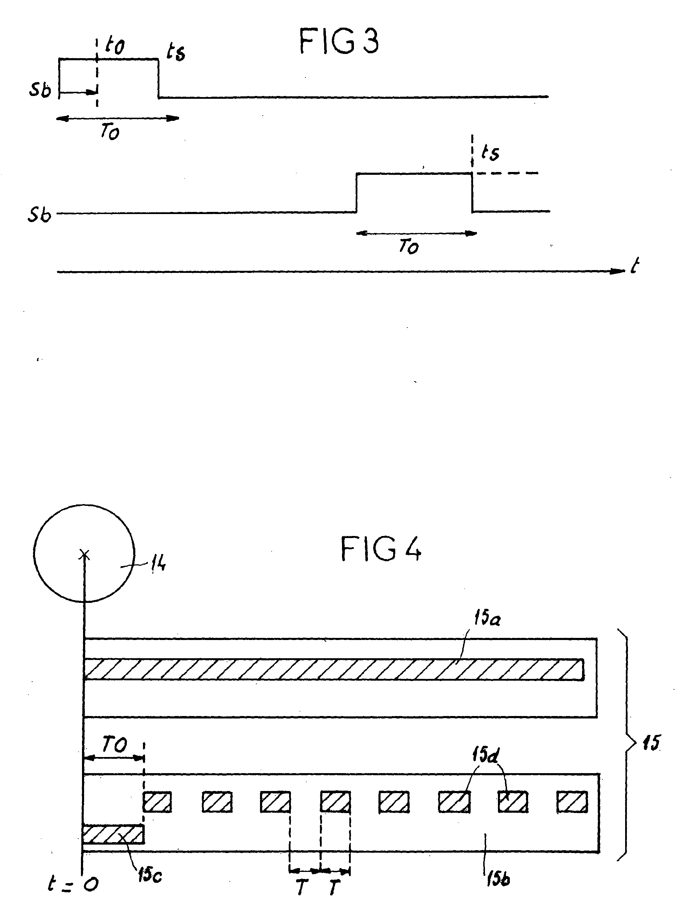

Le fonctionnement précédemment décrit est illustré par les diagrammes des figures 2 et 3, qui représentent, en fonction du temps t, les signaux Sa et Sb correspondant à l'état du contact électrique 8.

La première ligne du diagramme de la figure 2 montre le signal Sa obtenu en cas de fonctionnement normal de la minuterie, ce signal Sa présentant alors des "créneaux" réguliers, c'est-à-dire qu'il passe du niveau "zéro" au niveau "un", et inversement, à des intervalles de temps réguliers T, inférieurs à la durée T1.

Les deux lignes suivantes du diagramme de la figure 2 montrent le signal Sa obtenu en cas de blocage de la rotation de la minuterie, que ce soit à un moment où ce signal est à son niveau haut (deuxième ligne) ou à son niveau bas (troisième ligne). Dans les deux cas, il ne se produit plus de changement d'état du signal Sa dans la durée T1, à partir du moment où la rotation est bloquée. Cette interruption de la rotation est donc bien caractérisée, et l'unité électronique 5 en assure la détection pour mettre la minuterie à l'arrêt.

La quatrième ligne du diagramme de la figure 2 illustre le cas d'un freinage anormal de la rotation de la minuterie, sans blocage. Au moment de ce freinage, les changements d'état du signal Sa vont avoir lieu à un intervalle de temps supérieur à la durée T1, de sorte que l'unité électronique 5 détectera aussi ce type de défaut pour commander la mise à l'arrêt de la minuterie.

En complément, le diagramme de la figure 3 représente la situation résultant de la sélection d'un temps court, inférieur à un temps minimum TO. La minuterie est, dans ce cas, mise à l'arrêt dès l'instant to, c'est-à-dire après une courte temporisation. Comme l'illustre la seconde ligne de ce diagramme, on notera qu'en cas de sélection d'un temps moyen ou long, autorisant le fonctionnement normal de la minuterie, le contact 8 se ferme aussi sur le contact fixe 8b vers la fin du déroulement du temps sélectionné ts, par exemple au cours des trois dernières minutes qui précèdent l'arrêt de la minuterie, sans qu'il en résulte d'effet particulier. Toutefois, si le contact principal de la minuterie était resté "collé" à la fin du temps sélectionné, comme le symbolise la prolongation indiquée en pointillés, cette situation anormale est aussi détectée et provoque l'arrêt de la minuterie et de l'alimentation des lampes.

Pour une bonne compréhension de ce qui précède, il est à noter que l'organe rotatif de la minuterie possède une came dont la conformation matérialise "à l'envers" les séquences temporelles précédemment décrites, puisqu'en fonctionnement cet organe rotatif tourne "en reculant" vers sa position angulaire "zéro" qui est sa position d'arrêt. Ceci est illustré par le schéma de la figure 4 qui montre l'organe rotatif 14 dans sa configuration réelle, circulaire, et sa came 15 en représentation développée. Cette came 15 se décompose, en fait, en une came de commande 15a à plage continue, pour le temps affiché, et en une came de contrôle 15b plus particulièrement concernée par la présente invention, qui comporte à partir de la position zéro : une première plage 15c qui correspond par exemple à un temps de trois minutes, puis une série de plages 15d espacées, qui correspondent aux intervalles de temps T, les plages 15c et 15d coopérant avec le premier contact 8.

On notera aussi que, grâce à la structure du dispositif de la présente invention et au mode de fonctionnement qui en résulte, une coupure temporaire de l'alimentation électrique ne perturbe pas le système vis-à-vis des prescriptions de sécurité, c'est-à-dire qu'il reste assuré, après rétablissement de l'alimentation, qu'en aucun cas le temps total de fonctionnement, donc d'alimentation des lampes 2, ne dépassera 110% du temps initialement affiché.

L'on ne s'éloignerait pas du cadre de l'invention, telle que définie dans les revendications annexées :
- par des modifications de détail du circuit électrique ;
- par la réalisation de fonctions supplémentaires, telles que l'auto-diagnostic du fonctionnement du relais ou l'enregistrement des divers incidents de fonctionnement détectés, au moyen de l'unité électronique ;
- par l'utilisation du même dispositif, avec des temps appropriés, dans des applications de tout genre, domestiques ou professionnelles : appareils électro-domestiques à minuterie, tels que sèche-linge, appareils de cuisson professionnels ou industriels, chargeurs de batterie, saunas, etc... nécessitant une surveillance de leur minuterie dans un but de sécurité, ou du moins dans un but de contrôle de fonctionnement ou de préservation des appareils ou installations concernés.

## Revendications

1. Procédé de surveillance et de sécurité d'une minuterie électro-mécanique (1), prévue pour sélectionner, afficher et contrôler le temps de fonctionnement d'un appareil ou d'une installation, **caractérisé en ce que**, pour éviter le dépassement du temps sélectionné et affiché par la minuterie (1), ce procédé consiste :
- à émettre, à partir de la rotation motorisée d'un organe (14, 15) de la minuterie (1), un signal électrique (Sa) à deux niveaux (0, 1), alternativement haut et bas, dont les changements d'état s'effectuent à des intervalles de temps réguliers (T) au cours du fonctionnement normal de la minuterie (1 ) ;
- à comparer les intervalles de temps entre changements d'état successifs dudit signal électrique (Sa) à une durée prédéterminée (T1), supérieure à la valeur de ces intervalles (T) au cours du fonctionnement normal de la minuterie (1) ; et
- en cas de dépassement de ladite durée prédéterminée (T1), à interrompre le fonctionnement de la minuterie (1), en provoquant ainsi la mise à l'arrêt de l'appareil ou installation (2) concerné.

2. Procédé selon la revendication , **caractérisé en ce qu'**il comprend, en cas de dépassement de la durée prédéterminée (T1) provoquant l'interruption du fonctionnement de la minuterie (1), l'émission d'un signal avertisseur, notamment un signal acoustique ou lumineux.

3. Procédé selon la revendication 1 ou 2, **caractérisé en ce qu'**il comprend une opération de détection d'un temps affiché inférieur à un temps minimum prédéfini (TO), la détection effective d'un temps affiché inférieur au temps minimum (TO) provoquant, au bout d'un temps bref, le non-fonctionnement de la minuterie (1 ), ainsi que l'émission d'un signal avertisseur, notamment un signal acoustique ou lumineux.

4. Procédé selon l'une quelconque des revendications 1 à 3, **caractérisé en ce qu'**il comprend la détection d'un éventuel "collage" du contact principal (12) de la minuterie (1), à la fin du temps sélectionné, provoquant alors l'arrêt de la minuterie (1).

5. Procédé selon l'une quelconque des revendications 1 à 4, **caractérisé en ce qu'**il comprend l'enregistrement des divers incidents de fonctionnement détectés.

6. Dispositif de surveillance et de sécurité d'une minuterie électro-mécanique (1), pour la mise en oeuvre du procédé selon l'une quelconque des revendications 1 à 5, **caractérisé en ce que**, pour éviter le dépassement du temps sélectionné et affiché par la minuterie (1), ce dispositif comprend, en combinaison :
- sur un organe rotatif (14) de la minuterie (1), une came (15) qui coopère avec au moins un contact électrique (8, 8a) placé sur une branche de circuit (9a), de manière à générer un signal électrique (Sa) à deux niveaux (0, 1), dont les changements d'état s'effectuent à intervalles de temps réguliers (T) au cours du fonctionnement normal de la minuterie (1) ;
- une unité électronique (5) à laquelle est raccordée la branche de circuit (9a) précitée, et dans laquelle est effectuée une analyse du signal électrique (Sa) à deux niveaux (0, 1), avec détection des situations anormales dans lesquelles l'intervalle de temps entre changements d'état successifs de ce signal (Sa) dépasse une durée prédéterminée (T1) ; et
- une commande de relais (10), en sortie de l'unité électronique (5), répondant à la détection d'une situation anormale par une interruption du fonctionnement de la minuterie (1).

7. Dispositif selon la revendication 6, **caractérisé en ce qu'**il comprend un contact électrique supplémentaire (8, 8b) actionné par la came (15) de l'organe rotatif (14) précité de la minuterie (1), en cas de sélection par ledit organe d'un temps inférieur à un temps minimum prédéfini (TO), ce contact supplémentaire (8, 8b) étant placé sur une autre branche de circuit (9b) raccordée à l'unité électronique (5), et assurant le maintien à l'arrêt de la minuterie (1 ) en cas de sélection d'un temps bref.

8. Dispositif selon la revendication 7, **caractérisé en ce que** ledit contact électrique supplémentaire (8, 8b) assure aussi la détection d'un éventuel "collage" du contact principal (12) de la minuterie (1), par un montage en série de ce contact supplémentaire (8, 8b) avec le contact principal (12).

9. Utilisation du procédé selon l'une quelconque des revendications 1 à 5, ou du dispositif selon l'une quelconque des revendications 6 à 8, dans une minuterie (1) de solarium à lampes émettrices de rayonnement ultra-violet (2).
